# DEMANDE DE BREVET EUROPEEN

(11) **EP 4 840 716 A1**
(43) Date de publication de la demande: **18.11.2026**
(21) Numéro de dépôt: 26177973.0
(22) Date de dépôt: 11.05.2026
(51) Int. Cl.: B60W 30/16

(54) **PROCÉDÉ DE PLACEMENT D'UN VÉHICULE À UNE DISTANCE DE SÉCURITÉ DONNÉE D'UN VÉHICULE CIBLE**

(30) Priorité: 12.05.2025 FR 2504972
(71) Demandeur: RENAULT s.a.s., 92100 Boulogne-Billancourt (FR)
(72) Inventeur: RONDEL, Jérémie, 92100 Boulogne-Billancourt (FR)
(74) Mandataire: Renault Group

(57) **Abrégé**

Un aspect de l'invention concerne un procédé de placement d'un véhicule (200) à une distance de sécurité donnée d'un véhicule cible (201) circulant dans une voie (202-1) de circulation, comportant les étapes suivantes :
- Calcul d'un coefficient de comportement erratique associé au véhicule cible (201), évaluant un risque que le véhicule cible (201) réalise une manœuvre dangereuse pour ledit véhicule (200) ;
- Placement dudit véhicule (200) à la distance de sécurité donnée, la distance de sécurité donnée dépendant du coefficient de comportement erratique calculé.

## Description

### DOMAINE TECHNIQUE DE L'INVENTION

Le domaine technique de l'invention est celui des véhicules, et plus particulièrement celui du contrôle du positionnement des véhicules dans leurs voies de circulation.

La présente invention concerne un procédé de placement d'un véhicule à une distance de sécurité donnée d'un véhicule cible. La présente invention concerne également un véhicule et un produit-programme d'ordinateur pour la mise en œuvre du procédé.

### ARRIERE-PLAN TECHNOLOGIQUE DE L'INVENTION

La fonction de contrôle du positionnement d'un véhicule dans sa voie est une prestation permettant au véhicule d'automatiquement se serrer d'un côté de la voie dans laquelle il circule pour dégager un espace en interligne pour que des motos ou des véhicules d'urgence puissent passer, ou pour dépasser un véhicule de gros gabarit ou circulant à vitesse élevée et proche dudit véhicule.

La fonction de contrôle du positionnement d'un véhicule dans sa voie permet donc d'assurer une distance de sécurité entre le véhicule et un autre véhicule dans son environnement proche dans certaines situations prédéfinies. Cependant, il a été constaté qu'il existe d'autres situations dans lesquelles un conducteur va naturellement réaliser un décalage pour augmenter sa distance par rapport à un véhicule voisin, en particulier quand il pressent qu'un véhicule a de grandes chances de réaliser une manœuvre dangereuse, par exemple dans le cas où le conducteur dépasse un autre véhicule avec les feux de détresse activés.

Il existe donc un besoin d'améliorer la fonction de contrôle du positionnement d'un véhicule dans sa voie pour la rendre capable d'anticiper une manœuvre dangereuse réalisée par un véhicule proche.

### RESUME DE L'INVENTION

L'invention offre une solution aux problèmes évoqués précédemment, en permettant d'assurer une distance de sécurité entre un véhicule et les véhicules voisins qui minimise les risques pour son conducteur.

Un premier aspect de l'invention concerne un procédé de placement d'un véhicule à une distance de sécurité donnée d'un véhicule cible circulant dans une voie de circulation, le procédé comportant les étapes suivantes :
- Calcul d'un coefficient de comportement erratique associé au véhicule cible, évaluant un risque que le véhicule cible réalise une manœuvre dangereuse pour ledit véhicule ;
- Placement dudit véhicule à la distance de sécurité donnée, la distance de sécurité donnée dépendant du coefficient de comportement erratique calculé.

Grâce à l'invention, le calcul d'un coefficient de comportement erratique représentatif des chances qu'un véhicule cible réalise une manœuvre dangereuse est utilisé pour définir une distance de sécurité à placer entre le véhicule et le véhicule voisin pour minimiser les risques pour le conducteur.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

Selon une variante de réalisation, le coefficient de comportement erratique dépend d'un nombre de mouvements latéraux du véhicule cible dans la voie, répondant à une condition de mouvement latéral prédéfinie, et/ou d'une différence de vitesses entre ledit véhicule et le véhicule cible, et/ou du fait que le véhicule cible ait un clignotant activé ou non, et/ou du fait que le véhicule cible ait un feu de détresse activé ou non, et/ou d'une accélération longitudinale du véhicule cible et/ou d'une accélération latérale du véhicule cible.

Ainsi, le coefficient de comportement erratique peut prendre en compte plusieurs signes avant-coureurs d'une manœuvre dangereuse parmi lesquels des oscillations du véhicule cible dans sa voie, une vitesse relative élevée, la présence d'un clignotant ou d'un feu de détresse allumé, ou une décélération importante.

Selon une sous-variante de réalisation de la variante de réalisation précédente, un mouvement latéral répond à la condition de mouvement latéral si l'amplitude latérale dudit mouvement latéral est supérieure à un seuil d'amplitude prédéfini sur un intervalle de temps prédéfini.

Selon une sous-variante de réalisation de la variante de réalisation précédente compatible avec la sous-variante de réalisation précédente, le coefficient de comportement erratique est une somme pondérée d'un premier terme dépendant du nombre de mouvements latéraux du véhicule cible dans la voie, répondant à la condition de mouvement latéral prédéfinie, d'un deuxième terme dépendant de la différence de vitesses entre ledit véhicule et le véhicule cible, d'un troisième terme dépendant du fait que le véhicule cible ait un clignotant activé ou non, d'un quatrième terme dépendant du fait que le véhicule cible ait un feu de détresse activé ou non, d'un cinquième terme dépendant de l'accélération longitudinale du véhicule cible et d'un sixième terme dépendant de l'accélération latérale du véhicule cible.

Selon une alternative de réalisation de la sous-variante de réalisation précédente, ledit véhicule circule dans une autre voie de circulation adjacente à ladite voie et le premier terme dépend d'une durée mise par ledit véhicule pour atteindre le véhicule cible.

Ainsi, l'influence du nombre de mouvements latéraux du véhicule cible dans la voie, répondant à la condition de mouvement latéral prédéfinie sur le coefficient de comportement erratique dépend de l'intervalle de temps sur lesquels ces mouvements latéraux ont été réalisés. Par exemple, si 5 oscillations ont eu lieu en 10 secondes, le premier facteur aura plus d'importance que si c'est 5 oscillations ont eu lieu en 30 secondes.

Selon une variante de réalisation compatible avec la variante de réalisation précédente, l'étape de placement est mise en œuvre automatiquement par une fonction de contrôle du positionnement du véhicule dans la voie implémentée sur ledit véhicule.

Ainsi, la manœuvre de placement est réalisée automatiquement, sans intervention du conducteur, via des fonctions de sécurité implémentées sur le véhicule.

Selon une variante de réalisation compatible avec les variantes de réalisation précédentes, le procédé selon l'invention comporte en outre une étape d'émission d'un message à l'intention d'un conducteur dudit véhicule, comportant une indication de la distance de sécurité à laquelle placer ledit véhicule.

Ainsi, le conducteur est informé qu'il doit se placer à une certaine distance de sécurité du véhicule cible pour minimiser les risques d'accident.

Selon une variante de réalisation compatible avec les variantes de réalisation précédentes, le procédé selon l'invention comporte en outre une étape initiale de vérification d'un ensemble de conditions de non-placement anticipé à distance, les étapes de calcul et de placement n'étant réalisées que si l'ensemble de conditions est vérifié.

Ainsi, le coefficient de comportement erratique n'est pas évalué si certaines conditions pour lesquelles un placement à distance est déjà réalisé sont vérifiées.

Selon une sous-variante de réalisation de la variante de réalisation précédente, l'ensemble de conditions de non-placement anticipé à distance dépend d'un type de route sur laquelle circule ledit véhicule et le véhicule cible, et/ou d'une courbure de la route sur laquelle circule ledit véhicule et le véhicule cible, et/ou d'une vitesse dudit véhicule, et/ou de la présence d'un embouteillage, et/ou si ledit véhicule effectue un dépassement du véhicule cible, d'un type de véhicule associé au véhicule cible et/ou d'une distance entre le véhicule cible et une ligne de démarcation de voie située entre ledit véhicule et le véhicule cible.

Un deuxième aspect de l'invention concerne un véhicule comportant des moyens pour mettre en œuvre le procédé selon l'invention.

Un troisième aspect de l'invention concerne un produit programme d'ordinateur comprenant des instructions qui, lorsque le programme est exécuté par un ordinateur, conduisent celui-ci à mettre en œuvre les étapes du procédé selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes d'un procédé selon l'invention.
- La figure 2 montre une représentation schématique d'un véhicule sur lequel est appliqué le procédé selon l'invention.

### DESCRIPTION DETAILLEE

Sauf précision contraire, un même élément apparaissant sur des figures différentes présente une référence unique.

L'invention concerne un procédé permettant le placement d'un véhicule à une distance de sécurité donnée d'un autre véhicule, dit véhicule cible, c'est-à-dire à une distance suffisante pour permettre au véhicule d'éviter le véhicule cible qui réaliserait une manœuvre dangereuse et/ou imprévisible.

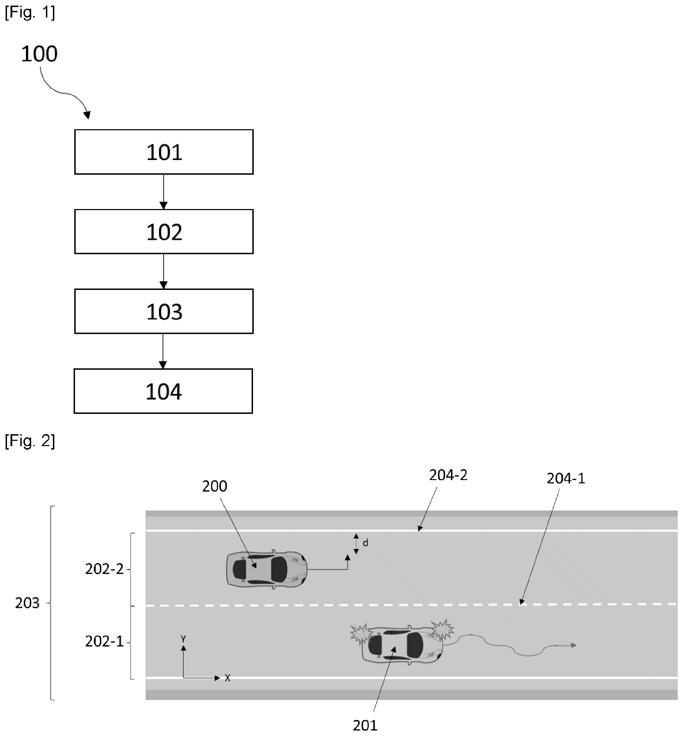

L'enchaînement des étapes du procédé 100 est illustré sur la figure 1 et une représentation schématique de la mise en œuvre du procédé 100 est illustrée sur la figure 2.

La distance de sécurité peut être une distance longitudinale, c'est-à-dire selon un axe X selon lequel se déplace le véhicule 200 sur la route 203 sur laquelle le véhicule 200 circule, et/ou latérale, c'est-à-dire selon un axe Y perpendiculaire à l'axe X dans un plan de la route 203.

La route 203 comporte au moins une voie de circulation 202-1, 202-2 et le véhicule 200 et le véhicule cible 201 peuvent se trouver dans une même voie de circulation ou dans deux voies de circulation distinctes, par exemple dans deux voies de circulation adjacentes.

Sur l'exemple de la figure 2, le véhicule cible 201 est dans une première voie de circulation 202-1 et le véhicule 200 est dans une deuxième voie de circulation 202-2 adjacente à la première voie de circulation 202-1.

Un exemple de manœuvre dangereuse peut être une décélération brutale du véhicule cible 201, en particulier si le véhicule 200 et le véhicule cible 201 circulent dans une même voie, ou un déport brusque et/ou rapproché du véhicule cible 201 devant le véhicule 200 dans le cas où le véhicule cible 201 circule sur une voie adjacente à la voie du véhicule 200.

Le procédé 100 selon l'invention peut comporter une première étape 101 consistant à vérifier qu'un ensemble de conditions selon lequel un placement du véhicule 200 à une distance de sécurité donnée du véhicule cible 201 n'a pas déjà été réalisé, dit ensemble de conditions de non-placement anticipé à distance, s'applique.

L'ensemble de conditions de non-placement anticipé à distance comporte au moins une condition relative au type de route 203 sur laquelle circule le véhicule 200 et le véhicule cible 201, et/ou une condition relative à une courbure de la route 203 sur laquelle circule le véhicule 200 et le véhicule cible 201, et/ou une condition relative à une vitesse du véhicule 200, et/ou une condition relative à la présence d'un embouteillage, et/ou si le véhicule 200 effectue un dépassement du véhicule cible 201, une condition relative à un type de véhicule associé au véhicule cible 201 et/ou une condition relative à une distance entre le véhicule cible 201 et une ligne de démarcation de voie 204-1 située entre le véhicule 200 et le véhicule cible 201.

Le type de véhicule peut par exemple être choisi parmi le type voiture, le type camion et le type moto.

Par exemple, l'ensemble de conditions de non-placement anticipé à distance n'est pas vérifié si le véhicule 200 circule sur une route 203 avec au moins deux voies de circulation 202-1, 202-2 ou avec un rayon de courbure supérieur à une valeur de courbure prédéfinie, et, si le véhicule 200 est dans un embouteillage et/ou si lorsque le véhicule 200 dépasse le véhicule cible 201, le véhicule cible 201 se trouve à une distance inférieure à une distance minimale prédéfinie de la ligne de démarcation de voie 204-1 située entre le véhicule 200 et le véhicule cible 201 et/ou le véhicule cible 201 est un camion.

La distance minimale prédéfinie vaut par exemple 300 mètres.

La valeur de courbure prédéfinie dépend par exemple de la vitesse du véhicule 200.

L'ensemble de conditions de non-placement anticipé à distance correspond par exemple aux conditions dans lesquelles une fonction de contrôle du positionnement d'un véhicule dans sa voie réalise automatiquement une manœuvre de décalage latéral du véhicule 200 dans sa voie 202-2, selon l'art antérieur.

La fonction de contrôle du positionnement du véhicule dans la voie est par exemple la fonction permettant au véhicule d'automatiquement se serrer d'un côté de sa voie pour dégager un espace en interligne dans certaines situations prédéfinies, par exemple pour que des motos ou des véhicules d'urgence puissent passer, ou pour augmenter la distance entre véhicules lors d'un dépassement.

Si le procédé 100 selon l'invention comporte la première étape 101, les étapes suivantes du procédé 100 ne sont réalisées que si l'ensemble de conditions de non-placement anticipé à distance est vérifié.

Une deuxième étape 101 du procédé 100 selon l'invention consiste à calculer un coefficient de comportement erratique pour le véhicule cible 201.

Le coefficient de comportement erratique est représentatif du risque qu'à le véhicule cible 201 de réaliser une manœuvre susceptible de mettre en danger un conducteur du véhicule 200.

Le coefficient de comportement erratique dépend par exemple d'un nombre de mouvements latéraux du véhicule cible 201 dans sa voie de circulation 202-1, répondant à une condition de mouvement latéral prédéfinie, et/ou d'une différence de vitesses entre le véhicule 200 et le véhicule cible 201, et/ou du fait que le véhicule cible 201 ait un clignotant activé ou non, et/ou du fait que le véhicule cible 201 ait un feu de détresse activé ou non, et/ou d'une accélération longitudinale du véhicule cible 201 et/ou d'une accélération latérale du véhicule cible 201.

Un mouvement latéral répond par exemple à la condition de mouvement latéral si l'amplitude latérale dudit mouvement latéral est supérieure à un seuil d'amplitude prédéfini sur un intervalle de temps prédéfini.

Le seuil d'amplitude vaut par exemple 10 cm et l'intervalle de temps prédéfini vaut par exemple 2 secondes.

Le coefficient de comportement erratique N est par exemple une somme pondérée d'un premier terme A dépendant du nombre de mouvements latéraux du véhicule cible 201 dans sa voie de circulation 202-1, répondant à la condition de mouvement latéral prédéfinie, d'un deuxième terme B dépendant de la différence de vitesses entre le véhicule 200 et le véhicule cible 201, d'un troisième terme C dépendant du fait que le véhicule cible 201 ait un clignotant activé ou non, d'un quatrième terme D dépendant du fait que le véhicule cible 201 ait un feu de détresse activé ou non, d'un cinquième terme E dépendant de l'accélération longitudinale du véhicule cible 201 et d'un sixième terme F dépendant de l'accélération latérale du véhicule cible 201.

Si le véhicule 200 circule dans une voie de circulation 202-1 adjacente à la voie de circulation 202-1 du véhicule cible 201, le premier terme A dépend par exemple d'une durée mise par le véhicule 200 pour atteindre le véhicule cible 201, c'est-à-dire de la durée mise par le véhicule 200 pour que son parechoc avant arrive au niveau du parechoc arrière du véhicule cible 201.

Le premier facteur A est par exemple égal au nombre de mouvements latéraux du véhicule cible 201 dans sa voie de circulation 202-1, répondant à la condition de mouvement latéral prédéfinie si ce nombre est inférieur ou égal à 2, et à 3 sinon, si la durée mise par le véhicule 200 pour atteindre le véhicule cible 201 est comprise entre 15 et 30 secondes, aux valeurs précédentes divisées par 2 si la durée mise par le véhicule 200 pour atteindre le véhicule cible 201 est supérieure à 30 secondes et aux valeurs précédentes multipliées par 2 si la durée mise par le véhicule 200 pour atteindre le véhicule cible 201 est inférieure à 15 secondes.

Le deuxième facteur B vaut par exemple 0 si la différence de vitesses entre le véhicule 200 et le véhicule cible 201 est inférieure à 10 km/h, 1 la différence de vitesses entre le véhicule 200 et le véhicule cible 201 est comprise entre 10 et 20 km/h, 2 la différence de vitesses entre le véhicule 200 et le véhicule cible 201 est comprise entre 20 et 30 km/h et 3 si la différence de vitesses entre le véhicule 200 et le véhicule cible 201 est supérieure à 30 km/h.

Le troisième facteur C vaut par exemple 0 si le véhicule cible 201 n'a pas un clignotant activé et 3 si le véhicule cible 201 a un clignotant activé.

Le quatrième facteur D vaut par exemple 0 si le véhicule cible 201 n'a pas un feu de détresse activé et 3 si le véhicule cible 201 a un feu de détresse activé.

Le cinquième facteur E vaut par exemple 1 si l'accélération longitudinale du véhicule cible 201 est inférieure à -2 m/s² et 0 sinon.

Le sixième facteur F vaut par exemple 2 si l'accélération latérale du véhicule cible 201 est supérieure en valeur absolue à 1 m/s² et 0 sinon.

Le coefficient de comportement erratique N vaut par exemple :
$N = A + B + C + D + E + F$

La valeur de la distance de sécurité donnée à laquelle placer le véhicule 200 dépend de la valeur du coefficient de comportement erratique calculé lors de la deuxième étape 102.

Si on prend l'exemple de calcul précédent pour le coefficient de comportement erratique N, la distance de sécurité est par exemple égale à une première valeur si le coefficient de comportement erratique N est strictement inférieur à 2, à une deuxième valeur si le coefficient de comportement erratique N est compris entre 2 et 3, 2 compris, à une troisième valeur si le coefficient de comportement erratique N est compris entre 3 et 4, 4 compris et à une quatrième valeur si le coefficient de comportement erratique N est supérieur ou égal à 4.

Si la distance de sécurité d est latérale, comme illustré sur la figure 2, la première valeur vaut par exemple 0, la deuxième valeur vaut par exemple 30 cm par rapport à une ligne de démarcation 204-2 extérieure de la voie 202-2 dans laquelle circule le véhicule 200, la troisième valeur vaut par exemple 20 cm par rapport à la ligne de démarcation 204-2 extérieure de la voie 202-2 dans laquelle circule le véhicule 200 et la quatrième valeur vaut par exemple 10 cm par rapport à la ligne de démarcation 204-2 extérieure de la voie 202-2 dans laquelle circule le véhicule 200.

La ligne de démarcation 204-2 extérieure de la voie 202-2 dans laquelle circule le véhicule 200 est par définition la ligne de démarcation de la voie de circulation 202-2 la plus éloignée du véhicule cible 201.

Si la distance de sécurité d est longitudinale, la première valeur correspond par exemple à la distance parcourue par le véhicule 200 en 1 seconde, la deuxième valeur correspond par exemple à la distance parcourue par le véhicule 200 en 2 secondes, la troisième valeur correspond par exemple à la distance parcourue par le véhicule 200 en 3 secondes et la quatrième valeur correspond par exemple à la distance parcourue par le véhicule 200 en 4 secondes.

Le procédé 100 selon l'invention peut comporter une troisième étape 103 consistant à émettre un message à l'intention du conducteur du véhicule 200.

L'émission peut consister en l'affichage d'un message ou une indication visuelle sur une interface homme-machine du véhicule 200, par exemple un écran, et/ou en l'émission d'un message vocal via un microphone du véhicule 200.

Le message comporte par exemple une indication de la distance de sécurité à laquelle placer le véhicule 200.

Une quatrième étape 104 du procédé 100 selon l'invention consiste à placer le véhicule 200 à la distance de sécurité donnée dépendant du coefficient de comportement erratique calculé lors de la deuxième étape 102.

Selon un premier mode de réalisation, la quatrième étape 104 est mise en œuvre automatiquement par une fonction de contrôle du positionnement du véhicule 200 dans la voie, implémentée sur le véhicule 200.

La fonction de contrôle du positionnement du véhicule dans la voie est par exemple la fonction permettant au véhicule d'automatiquement se serrer d'un côté de sa voie pour dégager un espace en interligne dans certaines situations prédéfinies, par exemple pour que des motos ou des véhicules d'urgence puissent passer, ou pour augmenter la distance entre véhicules lors d'un dépassement, ou la fonction de régulation de vitesse adaptative permettant au véhicule 200 de respecter une distance de sécurité longitudinale minimale avec un véhicule situé devant, dépendant de la vitesse du véhicule.

Selon un deuxième mode de réalisation, la quatrième étape 104 est mise en œuvre par le conducteur du véhicule 200.

## Revendications

1. Procédé (100) de placement d'un véhicule (200) à une distance de sécurité donnée d'un véhicule cible (201) circulant dans une voie (202-1) de circulation, le procédé (100) comportant les étapes suivantes :
- Vérification (101) d'un ensemble de conditions de non-placement anticipé à distance ;
- Si l'ensemble de conditions de non-placement anticipé à distance est vérifié :
- Calcul (102) d'un coefficient de comportement erratique associé au véhicule cible (201), évaluant un risque que le véhicule cible (201) réalise une manœuvre dangereuse pour ledit véhicule (200) ;
- Placement (104) dudit véhicule (200) à la distance de sécurité donnée, la distance de sécurité donnée dépendant du coefficient de comportement erratique calculé.

2. Procédé (100) selon la revendication précédente, dans lequel le coefficient de comportement erratique dépend d'un nombre de mouvements latéraux du véhicule cible (201) dans la voie (202-1), répondant à une condition de mouvement latéral prédéfinie, et/ou d'une différence de vitesses entre ledit véhicule (200) et le véhicule cible (201), et/ou du fait que le véhicule cible (201) ait un clignotant activé ou non, et/ou du fait que le véhicule cible (201) ait un feu de détresse activé ou non, et/ou d'une accélération longitudinale du véhicule cible (201) et/ou d'une accélération latérale du véhicule cible (201).

3. Procédé (100) selon la revendication précédente, dans lequel un mouvement latéral répond à la condition de mouvement latéral si l'amplitude latérale dudit mouvement latéral est supérieure à un seuil d'amplitude prédéfini sur un intervalle de temps prédéfini.

4. Procédé (100) selon l'une quelconque des revendications 2 ou 3, dans lequel le coefficient de comportement erratique est une somme pondérée d'un premier terme dépendant du nombre de mouvements latéraux du véhicule cible (201) dans la voie (202-1), répondant à la condition de mouvement latéral prédéfinie, d'un deuxième terme dépendant de la différence de vitesses entre ledit véhicule (200) et le véhicule cible (201), d'un troisième terme dépendant du fait que le véhicule cible (201) ait un clignotant activé ou non, d'un quatrième terme dépendant du fait que le véhicule cible (201) ait un feu de détresse activé ou non, d'un cinquième terme dépendant de l'accélération longitudinale du véhicule cible (201) et d'un sixième terme dépendant de l'accélération latérale du véhicule cible (201).

5. Procédé (100) selon la revendication précédente, dans lequel ledit véhicule (200) circule dans une autre voie (202-2) de circulation adjacente à ladite voie (202-1) et le premier terme dépend d'une durée mise par ledit véhicule (200) pour atteindre le véhicule cible (201).

6. Procédé (100) selon l'une quelconque des revendications précédentes, dans lequel l'étape (104) de placement est mise en œuvre automatiquement par une fonction de contrôle du positionnement du véhicule dans la voie implémentée sur ledit véhicule (200).

7. Procédé (100) selon l'une quelconque des revendications précédentes, comportant en outre une étape (103) d'émission d'un message à l'intention d'un conducteur dudit véhicule (200), comportant une indication de la distance de sécurité à laquelle placer ledit véhicule (200).

8. Procédé (100) selon l'une quelconque des revendications précédentes, dans lequel l'ensemble de conditions de non-placement anticipé à distance dépend d'un type de route (203) sur laquelle circule ledit véhicule (200) et le véhicule cible (201), et/ou d'une courbure de la route (203) sur laquelle circule ledit véhicule (200) et le véhicule cible (201), et/ou d'une vitesse dudit véhicule (200), et/ou de la présence d'un embouteillage, et/ou si ledit véhicule (200) effectue un dépassement du véhicule cible (201), d'un type de véhicule associé au véhicule cible (201) et/ou d'une distance entre le véhicule cible (201) et une ligne de démarcation de voie (204-1) située entre ledit véhicule (200) et le véhicule cible (201).

9. Véhicule (200) comportant des moyens pour mettre en œuvre le procédé (100) selon l'une quelconque des revendications précédentes.
